# EUROPÄISCHE PATENTSCHRIFT

(11) **EP 1 276 823 B1**
(45) Veröffentlichungstag und Bekanntmachung des Hinweises auf die Patenterteilung: **28.12.2005**
(21) Anmeldenummer: 01925524.9
(22) Anmeldetag: 03.04.2001
(51) Int. Cl.: C09D 175/08, C08G 18/48, C08G 18/66, C09D 5/08

(54) **LÖSEMITTELFREIE ZWEIKOMPENENTEN-POLYURETHAN- REAKTIVSYSTEME**
SOLVENT-FREE TWO-COMPONENT POLYURETHANE REACTIVE SYSTEMS
SYSTEME REACTIF POLYURETHANNE A DOUBLE COMPOSANTS, EXEMPT DE SOLVANT

(30) Priorität: 14.04.2000 DE 10018428
(43) Veröffentlichungstag der Anmeldung: 22.01.2003
(73) Patentinhaber: Bayer MaterialScience AG, 51368 Leverkusen (DE)
(72) Erfinder: SCHWINDT, Jürgen, 51373 Leverkusen (DE); TILLACK, Jörg, 42699 Solingen (DE); LAUE, Jörg, 06846 Dessau (DE)
(86) Internationale Anmeldenummer: PCT/EP2001/003771
(87) Internationale Veröffentlichungsnummer: WO 2001/079369

(56) Entgegenhaltungen:
- EP-A- 0 602 760
- DE-A- 4 200 172
- US-A- 4 279 962

## Beschreibung

Die vorliegende Erfindung betrifft die Verwendung von lösemittelfreien Zweikomponenten-Polyurethan-Reaktivsystemen zur Herstellung von bei bis zu 90°C dauertemperaturbeständigen und kathodenschutzverträglichen Beschichtungen.

Für den Schutz von Ölpipelines werden Beschichtungen mit hoher Dauertemperaturbelastbarkeit von bis zu 90°C für den Korrosionsschutz bei gleichzeitiger Kathodenschutzverträglichkeit gefordert.

Stand der Technik sind in diesem Bereich "Fusion Bonded Epoxid" (FBE) - Systeme als Grundierung. Dabei wird das Epoxid-Pulver auf das Rohr aufgebracht, durch Erhitzen des Rohres auf der metallischen Oberfläche aufgeschmolzen und zur Reaktion gebracht. Diese FBE-Schicht bestehen den Test bezüglich Kathodenschutz nach ASTM G 42-85 bei Dauertemperaturbelastung bis zu 60°C. Diese Grundierungen werden entweder dickschichtig mit Polyethylen (PE) im Sinterverfahren überschichtet oder es erfolgt ein Aufbau mit Polyurethanschaum/Kleber/Polyethylen.

Nachteile des Standes der Technik sind:
a) FBE-Systeme erreichen nicht die neuen Anforderungen bezüglich Dauertemperaturbeständigkeit bei Temp. > 60°C.
b) Die FBE-Systeme können nur mit einem großen Aufwand (Induktionsheizung => hoher Energiebedarf) bei geringer Produktivität vor Ort appliziert werden.

Die der Erfindung zugrundeliegende Aufgabe bestand daher darin, lösemittelfreie Flüssig-Grundierungen für den Korrosionsschutz von Rohren zur Verfügung zu stellen, die
a) eine Dauertemperaturbeständigkeit von bis zu 90°C bei gleichzeitiger Kathodenschutzverträglichkeit aufweisen,
b) sowohl vor Ort als auch in einer Werkstatt appliziert werden können,
c) ohne Energiezufuhr aushärten,
d) auch bei Minus-Temperaturen aushärten,
e) sowohl für das Rohr, als auch für die "Field Joints" verwendbar sind und
f) eine hohe Produktivität sicherstellen.

Gegenstand der Erfindung ist die Verwendung von lösemittelfreien Zweikomponenten-Polyurethan-Reaktivsystemen aus
A) einer lösemittelfreien Polyhydroxykomponente, bestehend aus
   A1) 40-100 Gew.-% einer hydroxygruppenaufweisenden, ethergruppenhaltigen Komponente mit einer Funktionalität ≥ 3,5 und einem Molgewicht von 280-1000 oder einem Gemisch mehrerer solcher Komponenten sowie
   A2) 0-60 Gew.-% von hydroxyfunktionellen Polyetherpolyacrylaten sowie
   A3) 0-60 Gew.% weiterer hydroxyfunktioneller Verbindungen,
   wobei sich die Gew.-% von A1) bis A3) immer zu 100 Gew.-% addieren,
   und
B) einer Polyisocyanatkomponente, bestehend aus mindestens einem organischen Polyisocyanat,
wobei das NCO:OH-Äquivalentverhältnis zwischen 0,8:1 und 1,5:1 liegt, zur Herstellung von bis zu 90°C dauertemperaturbeständigen und kathodenschutzverträglichen Beschichtungen.

Bei der hydroxylgruppenhaltigen Komponente A1) handelt es sich um Polyetherpolyole, die z. B. durch Addition cyclischer Ether, wie Ethylenoxid, Propylenoxid, Styroloxid, Butylenoxid oder Tetrahydrofuran an Startermoleküle wie ethergruppenfreie, mehrwertige Alkohole, Aminoalkohole oder Amine in an sich bekannter Weise zugänglich sind mit einem Molgewicht von 280-1000, vorzugsweise 350-700 und ganz besonders bevorzugt 400-500. Die mittlere Funktionalität der Startermoleküle bzw. der Startermolekülmischung muss hier bzgl. der Umsetzung mit cyclischen Ethern ≥ 3,5, bevorzugt ≥ 4 sein. Besonders bevorzugt sind Polyether, die zu mindestens 50 %, insbesondere zu mindestens 90 %, bezogen auf die Summe ihrer Wiederholungseinheiten, aus Wiederholungseinheiten der Struktur -CH(CH₃)CH₂O-aufgebaut sind.

Als Startermoleküle geeignete, mehrwertige Alkohole seien beispielhaft genannt: Glycerin, Trimethylolpropan, Butantriol-(1,2,4), Hexantriol-(1,2,6), Bis-(trimethylolpropan), Pentaerythrit, Mannit, Methylglykosid und/oder deren Gemische.

Geeignete Aminoalkohole sind z. B. 2-Aminoethanol, Diethanolamin, 3-Amino-1-propanol, 1-Amino-2-propanol, Diisopropanolamin, 2-Amino-2-hydroxymethyl-1,3-propandiol und/oder deren Gemische.

Geeignete mehrwertige Amine sind insbesondere aliphatische oder cycloaliphatische Amine, wie z. B. Ethylendiamin, 1,2-Diaminopropan, 1,3-Diaminopropan, 1,4-Diaminobutan, 1,3-Diamino-2,2-dimethylpropan, 4,4-Diaminodicyclohexylmethan, Isophorondiamin, Hexamethylendiamin, 1,12-Dodecandiamin oder aromatischen Aminen wie z.B. die Isomeren des Toluylendiamins und/oder deren Mischungen.

Alle beschriebenen Startermoleküle mit einer Funktionalität >3,5 können selbstverständlich nur Bestandteil einer Startermischung sein. Als Startermischungen können selbstverständlich auch Mischungen aus Alkoholen, Aminoalkoholen und/oder Aminen eingesetzt werden.

Die Herstellung der gegebenenfalls vorhandenen Polyhydroxykomponente A2) des erfindungsgemäßen Bindemittelgemisches kann z.B. nach EP-A 825210 erfolgen.

Bei der Alkoholkomponente A3) handelt es sich um eine oder mehrere Hydroxyverbindungen des Molgewichts 32-1000. Bevorzugt eingesetzt werden dabei niedermolekulare Hydroxyverbindungen des Molgewichts 32 - 350, wie z. B. Methanol, Ethanol, Propanol, Butanol, Hexanol, 2-Ethylhexanol, Cyclohexanol, Stearylalkohol, Ethylenglykol, Diethylenglykol, Triethylenglykol, Propandiol-1,2 und -1,3, Dipropylenglykol, Tripropylenglykol, Butandiol-1,2, -1,3, -1,4 und -2,3, Pentandiol-1,5, 3-Methylpentandiol-1,5, Hexandiol-1,6, 2-Ethylhexandiol-1,3, 2-Methylpropandiol-1,3, 2,2-Dimethylpropandiol-1,3, 2-Butyl-2-ethylpropandiol-1,3, 2,2,4-Trimethylpentandiol-1,3, Octandiol-1,8, höhermolekulare α-Alkandiole mit 9 - 18 Kohlenstoffatomen, Cyclohexandimethanol, Cyclohexandiol, Glycerin, Trimethylolpropan, Butantriol-1,2,4, Hexantriol-1,2,6, Bis(trimethylolpropan), Pentaerythrit, Mannit oder Methylglykosid.

Gegebenenfalls können als Komponente A3) auch die aus der Polyurethanchemie an sich bekannten Hydroxypolyester, Hydroxypolyesteramide, Hydroxypolyether mit einer Funktionalität < 3,5 Polythioetherpolyole, Hydroxypolycarbonate oder Hydroxypolyacetale bis zu einem Molgewicht von 1.000 eingesetzt werden.

Gegebenenfalls können der Polyhydroxykomponente A) die an sich in der Lacktechnologie bekannten Stabilisatoren wie Antioxidantien und/oder Lichtschutzmittel zugesetzt werden, um Licht- und Wetterstabilität der Polyetherpolyacrylate weiter zu verbessern; bevorzugt werden die erfindungsgemäßen Bindemittelgemische frei von Stabilisatoren eingesetzt.

Geeignete Antioxidantien sind z.B. sterisch gehinderte Phenole wie 4-Methyl-2,6-di-tert.-butylphenol (BHT) oder andere, unter der Produktklassenbezeichnung Irganox® von Ciba Geigy angebotene substituierte Phenole, Thioether (z.B. Irganox PS®, Ciba Geigy) oder Phosphite (z.B. Irgaphos®, Ciba Geigy). Geeignete Lichtschutzmittel sind z.B. HALS-Amine (Hindered Amine Light Stabilizers) wie z.B. Tinuvin® 622D oder Tinuvin® 765 (Ciba Geigy) sowie substituierte Benzotriazole wie z.B. Tinuvin® 234, Tinuvin® 327 oder Tinuvin® 571 (Ciba Geigy).

Die Polyhydroxykomponente A) setzt sich zu 40-100 Gew.-% aus A1), 0-60 Gew.-% aus A2) und 0-60 Gew.-% aus A3) zusammen. Die Summe aus A1) bis A3) ergibt, ohne Berücksichtigung der gegebenenfalls eingesetzten Antioxidantien oder Lichtschutzmittel, 100 Gew.-%.

Bei der erfindungsgemäßen Polyisocyanatkomponente B) handelt es sich um organische Polyisocyanate mit einer mittleren NCO-Funktionalität von mindestens 2 und einem Molgewicht von mindestens 140. Gut geeignet sind vor allem (i) unmodifizierte organische Polyisocyanate des Molgewichtsbereichs 140 - 300, (ii) Lackpolyisocyanate eines Molgewichts im Bereich von 300 - 1.000 sowie (iii) Urethangruppen-aufweisende NCO-Prepolymere eines über 1.000 liegenden Molgewichtes oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethylcyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanatodecan, Cyclohexan-1,3- und -1,4-diisocyanat, Xylylendiisocyanat-Isomere, 2,4-Diisocyanatotoluol oder dessen Gemische mit 2,6-Diisocyanatotoluol mit vorzugsweise, bezogen auf Gemisch, bis zu 35 Gew.% an 2,6-Diisocyanatotoluol, 2,2'-, 2,4'-, 4,4'-Diisocyanatodiphenylmethan oder technische Polyisocyanatgemische der Diphenylmethanreihe oder beliebige Gemische der genannten Isocyanate. Bevorzugt kommen dabei die Polyisocyanate der Diphenylmethanreihe, besonders bevorzugt als Isomerengemische, zum Einsatz.

Polyisocyanate der Gruppe (ii) sind die an sich bekannten, lösemittelfreien Lackpolyisocyanate. Unter dem Begriff "Lackpolyisocyanate" sind im Rahmen der Erfindung Verbindungen bzw. Gemische von Verbindungen zu verstehen, die durch an sich bekannte Oligomerisierungsreaktion von einfachen Diisocyanaten der unter (i) beispielhaft genannten Art erhalten werden.

Geeignete Oligomerisierungsreaktionen sind z.B. die Allophanatisierung, Biuretisierung, Carbodiimidisierung, Cyclisierung, Dimerisierung, Hamstoffbildung, Trimerisierung und/oder Urethanisierung. Oftmals laufen bei der "Oligomerisierung" mehrere der genannten Reaktionen gleichzeitig oder nacheinander ab.

Bevorzugt handelt es sich bei den "Lackpolyisocyanaten" um Polyisocyanate mit Uretdion-, Isocyanurat-, Allophanat-, Biuret-, Iminooxadiazindion- und/oder Oxadiazintrionstruktur.

Die Herstellung von derartigen Lackpolyisocyanaten ist bekannt und beispielsweise in der DE-A 1 595 273, DE-A 3 700 209 und DE-A 3 900 053 oder in der EP-A-0 330 966, EP-A0 259 233, EP-A-0 377 177, EP-A-0 496 208, EP-A-0 524 501 bzw. US-A 4 385 171 beschrieben.

Bei den vorstehend beschriebenen Lackpolyisocyanaten mit Urethangruppen aufweisenden Polyisocyanaten handelt es sich um Isocyanatgruppen aufweisende Prepolymere, wie sie durch Umsetzung von nieder- oder höhermolekularen Polyhydroxylverbindungen mit überschüssigen Mengen der vorstehend genannten Di- oder Polyisocyanate oder auch mit einem großen Überschuß der genannten Di- und Polyisocyanate und anschließende Entfernung des überschüssigen Polyisocyanates z.B. durch Dünnschichtdestillation erhalten werden können. Die Herstellung der Prepolymeren erfolgt im allgemeinen bei 40 bis 140°C, gegebenenfalls unter Mitverwendung geeigneter Katalysatoren.

Zur Herstellung derartiger Prepolymerer eignen sich niedermolekulare Polyhydroxylverbindungen des Molgewichtsbereichs 62 bis 299 wie beispielsweise Ethylenglykol, Propylenglykol-1,3- und Butandiol-1,4, Hexandiol-1,6, Neopentylglykol, 2-Ethylhexandiol-1,3, Glycerin, Trimethylolpropan, Pentaerythrit, niedermolekulare Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole.

Polyisocyanate der Gruppe (iii) sind die an sich bekannten Isocyanatgruppen aufweisenden Prepolymere auf Basis von einfachen Diisocyanaten (i) der oben beispielhaft genannten Art und/oder auf Basis von Lackpolyisocyanaten (ii) einerseits und organischen Polyhydroxylverbindungen eines über 300 liegenden Molgewichts andererseits.

Polyisocyanate der Gruppe (iii) sind vorzugsweise Prepolymere höhermolekulare Polyhydroxylverbindungen des Molgewichtsbereichs 300 bis 20000, vorzugsweise 1000 bis 8000, der aus der Polyurethanchemie an sich bekannten Art.

Höhermolekulare Polyhydroxylverbindungen zur Herstellung der Prepolymeren sind beispielsweise die den gemachten Angaben entsprechenden Polyesterpolyole auf Basis von niedermolekularen einfachen Alkoholen der bereits beispielhaft genannten Art und mehrbasischen Carbonsäuren wie beispielsweise Adipinsäure, Sebacinsäure, Phthalsäure, Isophthalsäure, Tetrahydrophthalsäure, Hexahydrophthalsäure, Maleinsäure, den Anhydriden derartiger Säuren oder beliebigen Gemischen derartiger Säuren bzw. Anhydriden.

Auch die obigen Angaben entsprechenden Hydroxylgruppen-aufweisenden Polylactone, insbesondere Poly-ε-caprolactone sind zur Herstellung der Prepolymeren bzw. Semiprepolymeren geeignet.

Zur Herstellung der Isocyanatgruppen aufweisenden Prepolymeren ebenfalls gut geeignet sind die den obigen Ausführungen entsprechenden Polyetherpolyole, wie sie in an sich bekannte Weise durch Alkoxylierung von geeigneten Startermolekülen zugänglich sind. Geeignete Startermoleküle sind beispielsweise die oben bereits genannten einfachen Polyole, Wasser, organische Polyamine mit mindestens zwei N-H-Bindungen oder beliebige Gemische derartiger Startermoleküle. Für die Alkoxylierungsreaktion geeignete Alkylenoxide sind insbesondere Ethylenoxid und/oder Propylenoxid, die in beliebiger Reihenfolge oder auch im Gemisch bei der Alkoxylierungsreaktion eingesetzt werden können.

Auch die den oben gemachten Angaben entsprechenden Polytetramethylenglykolpolyether wie sie in bekannter Weise durch kationische Polymerisation von Tetrahydrofuran zugänglich sind, sind gut zur Herstellung der Prepolymeren geeignet.

Zur Herstellung der Prepolymeren ferner geeignet sind die den obigen Ausführungen entsprechenden, Hydroxylgruppen-aufweisenden Polycarbonate, wie sie beispielsweise durch Umsetzung von einfachen Diolen der oben genannten Art mit Diarylcarbonaten, wie beispielsweise Diphenylcarbonat oder Phosgen hergestellt werden können.

Geeignet zur Herstellung der NCO-Gruppen aufweisenden Prepolymere sind ferner Polythioetherpolyole, wie sie zum Beispiel durch Polykondensation des Thiodiglykols mit sich selbst oder mit Diolen und/oder Polyolen der genannten Art erhalten werden können.

Ferner eignen sich Polyacetale, wie z.B. Polykondensationsprodukte aus Formaldehyd und Diolen bzw. Polyolen der genannten Art, wie sie unter Verwendung von sauren Katalysatoren wie Phosphorsäure oder p-Toluolsulfonsäure erhalten werden können.

Selbstverständlich können auch Gemische der beispielhaft genannten Hydroxylverbindungen zur Herstellung der Prepolymeren eingesetzt werden.

Zur Herstellung der erfindungsgemäßen Beschichtungsmittel werden die Komponenten A) und B) miteinander in solchen Mengenverhältnissen vermischt, die einem NCO:OH-Äquivalentverhältnis von 0,8:1 bis 1,5:1, vorzugsweise 0,9:1 bis 1,3:1 entsprechen.

Gegebenenfalls werden die üblichen Hilfs- und Zusatzstoffe der Beschichtungsmitteltechnologie zugemischt. Hierzu gehören beispielsweise Verlaufsmittel, viskositätskontrollierende Zusätze, Pigmente, Füllstoffe, Mattierungsmittel, UV-Stabilisatoren und Antioxidantien sowie Katalysatoren für die Vernetzungsreaktion. Diese Verbindungen werden normalerweise vor der Vermischung der Komponenten A) und B) der Komponente A) zugesetzt und vermischt.

Durch die erfindungsgemäße Verwendung der lösemittelfreien, dauertemperaturbeständigen Zweikomponenten-Polyurethan-Reaktivsysteme und gegebenenfalls der Hilfs- und Zusatzstoffen der beispielhaft genannten Art können beliebige metallische Substrate selbst unter Kathodenschutzbedingungen und Dauertemperaturbelastungen von bis zu 90°C geschützt werden.

Bevorzugt handelt es sich bei den metallischen Substraten z.B. um Spundwände, Schleusen, Schiffe, Röhren und andere metallische Objekte im Marine-, Offshore- und Onland-Bereich.

Besonders gut eignen sich die zuvor beschriebenen Beschichtungsmittel sowohl zum Schützen von Röhren als auch von kathodisch geschützten Röhren, selbst bei Dauertemperaturbelastungen von bis zu 90°C.

### Beispiele

Die Anreibung der lösemittelfreien Zweikomponenten-Polyurethan-Systeme erfolgte mittels Vakuumdissolver. Die Systeme wurden stets in Schichtdicken von 700-1200 µm auf SA 2 1/2 gestrahlten, 3 mm dicken Stahlblechen mittels 2K-Airless-Spritzanlage aufgespritzt. Nach einer einwöchigen Lagerung unter Laborbedingungen wurden die Systeme auf CD-Verträglichkeit geprüft.
Testbedingungen:
   - Medium: 5 %ige NaCl-Lösung
   - Temperatur: 80 °C
   - Spannung: U_{H} = -1260 mV
   - Dauer: Anforderung = 28 Tage
Beurteilungskriterien:-
   - Aussehen des Films (Filmabbau)
   - Konstanz der Stromaufnahme
   - Unterwanderung ≤ 10 mm

| | | Beisp. 1 [Teile] | Beisp. 2 [Teile] | Beisp. 3 [Teile] | Beisp. 4 [Teile] |
|---|---|---|---|---|---|
| **Komponente 1** | | | | | |
| Desmophen®40S1B | (Bayer) | 22,7 | 12,75 | 73,84 | 45,4 |
| Desmophen® VP LS 2285 | (Bayer) | - | 12,75 | - | 45,4 |
| 1,4-Butandiol | (Bayer) | - | - | 14,4 | 6,92 |
| Baylith® L-Paste | (Talke) | 5,4 | 5,4 | 21,6 | 21,6 |
| Anti-Terra 204 | (Byk Chemie) | 0,4 | 0,4 | 1,6 | 1,6 |
| Härter DT | (Bayer AG) | 0,4 | 0,4 | 1,6 | 1,6 |
| Crayvallac® Super | (Langer & Co) | 0,4 | 0,4 | 1,6 | 1,6 |
| Talc BC-standard | (Naitsch | - | - | 22,4 | 22,4 |
| | Mineralwerke) | | | | |
| Naitsch® BC Standard | (Naitsch | 5,6 | 5,6 | - | - |
| | Mineralwerke) | | | | |
| Plastorit® Naintsch 0 | (Naitsch | 7,7 | 7,7 | 30,8 | 30,8 |
| | Mineralwerke) | | | | |
| Schwersspat EWO | (Sachtleben) | 18,9 | 18,9 | 75,6 | 75,6 |
| Bayertitan® R-KB-4 | (Bayer) | 3,7 | 3,7 | - | - |
| Tronox® R-KB-4 | (Kerr Mc Gee) | - | - | 14,8 | 14,8 |

| **Komponente 2** | | | | | |
|---|---|---|---|---|---|
| Desmodur® VL | (Bayer) | 32,05 | 27,5 | 128,2 | 128,2 |

| **CD-Test (80°C)** | | | | | |
|---|---|---|---|---|---|
| Schichtdicke [µm] | | 1050 | 840 | 730 | 780 |
| Dauer | | 29 d | 29 d | 28 d | 28 d |

| **Auswertung** | | | | | |
|---|---|---|---|---|---|
| Stromaufnalune (Anfang) | [mA] | 12,6 | 14,5 | 25 | 32 |
| Stromaufnahme nach 20 d | [mA] | 22,5 | 17 | 18,5 | 33,5 |
| Stromaufnahme (Ende) | [mA] | 22 | 19 | 15 | 37,5 |
| Aussehen des Films | | keine | keine | keine | keine |
| (Oberflächenzerstörung) | | | | | |
| Unterwanderung an Künstlicher | [mm] | 0-1 | 0-1 | 0 | 0 |
| Verletzung [ASTMG 42-85] | | | | | |

## Patentansprüche

1. Verwendung von lösemittelfreien Zweikomponenten-Polyurethan-Reaktivsystemen aus
A) einer lösemittelfreien Polyhydroxykomponente, bestehend aus
A1) 40-100 Gew.-% einer hydroxygruppenaufweisenden, ethergruppenhaltigen Komponente mit einer Funktionalität ≥ 3,5 mit einem Molgewicht von 280-1000 oder einem Gemisch mehrerer solcher Komponenten sowie
A2) 0-60 Gew.-% von hydroxyfunktionellen Polyetherpolyacrylaten
sowie
A3) 0-60 Gew.-% weiterer hydroxyfunktioneller Verbindungen,
wobei sich die Gew.-% von A1) bis A3) immer zu 100 Gew.% addieren, und
B) einer Polyisocyanatkomponente, bestehend aus mindestens einem organischen Polyisocyanat,
wobei das NCO : OH-Äquivalentverhältnis zwischen 0,8:1 und 1,5:1 liegt, zur Herstellung von bis zu 90°C dauertemperaturbeständigen und kathodenschutzverträglichen Beschichtungen.

2. Verwendung nach Anspruch 1), **dadurch gekennzeichnet, dass** ein Zweikomponenten-Polyurethan-Reaktivsystem eingesetzt wird, das ein NCO:OH-Äquivalentverhältnis von 0,9:1 bis 1,3:1 hat.

3. Verwendung nach Anspruch 1), **dadurch gekennzeichnet, dass** ein Zweikomponenten-Polyurethan-Reaktivsystem eingesetzt wird, bei dem das Molgewicht der Komponente A1) 350-700 beträgt.

4. Verwendung nach Anspruch 1), **dadurch gekennzeichnet, dass** ein Zweikomponenten-Polyurethan-Reaktivsystem eingesetzt wird, bei dem die Funktionalität der Komponente A1) ≥ 4 ist.

5. Verwendung nach Anspruch 1), **dadurch gekennzeichnet, dass** ein Zweikomponenten-Polyurethan-Reaktivsystem eingesetzt wird, bei dem das Molgewicht der Komponente A3) zwischen 32 und 350 liegt.

6. Verwendung nach Anspruch 1), **dadurch gekennzeichnet, dass** ein Zweikomponenten-Polyurethan-Reaktivsystem eingesetzt wird, bei dem es sich bei der Komponente B um ein aromatisches, organisches Polyisocyanat handelt.

7. Verwendung gemäß Anspruch 1), **dadurch gekennzeichnet, dass** das Zweikomponenten-Polyurethan-Reaktivsystem auf gegebenenfalls kathodisch geschützte, metallische Substrate aufgebracht wird.

8. Verwendung nach Anspruch 1) und 7), **dadurch gekennzeichnet, dass** es sich bei den gegebenenfalls kathodisch geschützten, metallischen Substraten um Spundwände, Schleusen, Schiffe, Röhren und andere metallische Objekte im Marine-, Offshore- und Onland-Bereich handelt.

## Claims

1. Use of solvent-free two-component polyurethane reactive systems of
A) a solvent-free polyhydroxy component consisting of
A1) from 40 to 100 wt.% of a component having hydroxy groups and containing ether groups and having a functionality ≥ 3.5 and a molar weight of from 280 to 1000, or a mixture of several such components, and
A2) from 0 to 60 wt.% of hydroxy-functional polyether polyacrylates,
and
A3) from 0 to 60 wt.% of further hydroxy-functional compounds,
the sum of the wt.% of A1) to A3) always being 100 wt.%, and
B) a polyisocyanate component consisting of at least one organic polyisocyanate,
the NCO:OH equivalents ratio being from 0.8:1 to 1.5:1, in the preparation of coatings that have thermal endurance properties to 90°C and are compatible with cathodic protection.

2. Use according to claim 1), **characterised in that** there is used a two-component polyurethane reactive system having an NCO:OH equivalents ratio of from 0.9:1 to 1.3:1.

3. Use according to claim 1), **characterised in that** there is used a two-component polyurethane reactive system in which the molar weight of component A1) is from 350 to 700.

4. Use according to claim 1), **characterised in that** there is used a two-component polyurethane reactive system in which the functionality of component A1) is ≥ 4.

5. Use according to claim 1), **characterised in that** there is used a two-component polyurethane reactive system in which the molar weight of component A3) is from 32 to 350.

6. Use according to claim 1), **characterised in that** there is used a two-component polyurethane reactive system in which component B is an aromatic, organic polyisocyanate.

7. Use according to claim 1), **characterised in that** the two-component polyurethane reactive system is applied to metal substrates which may optionally be cathodically protected.

8. Use according to claims 1) and 7), **characterised in that** the optionally cathodically protected metal substrates are bulkheads, floodgates, ships, pipes and other metal objects in the marine, offshore and onshore field.

## Revendications

1. Utilisation de compositions réactives de polyuréthannes à deux composants, exemptes de solvants, qui consistent en :
A) un composant polyhydroxylé exempt de solvants, consistant lui-même en
A1) 40 à 100 % en poids d'un composant à groupes hydroxy et contenant également des groupes éther, à une fonctionnalité supérieure ou égale à 3,5 et un poids moléculaire de 280 à 1 000 ou d'un mélange de tels composants, et
A2) 0 à 60 % en poids de polyéther-polyacrylates à fonctions hydroxy et
A3) 0 à 60 % en poids d'autres composés à fonctions hydroxy,
les pourcentages en poids de A1 à A3 représentant toujours un total de 100 % en poids et
B) un composant polyisocyanate consistant en au moins un polyisocyanate organique,
avec un rapport de 0,8:1 à 1,5: entre les équivalents de groupes NCO et les équivalents de groupes OH,
pour l'application de revêtements stables à une exposition durable à des températures pouvant aller jusqu'à 90°C et compatibles avec la protection cathodique.

2. Utilisation selon la revendication 1, **caractérisée en ce que** l'on utilise une composition réactive de polyuréthannes à deux composants à un rapport de 0,9:1 à 1,3:1 entre les équivalents de groupes NCO et les équivalents de groupes OH.

3. Utilisation selon la revendication 1 **caractérisée en ce que** l'on utilise une composition réactive de polyuréthannes à deux composants dont le composant A1) a un poids moléculaire de 350 à 700.

4. Utilisation selon la revendication 1, **caractérisée en ce que** l'on utilise une composition réactive de polyuréthannes à deux composants dont le composant A1) a une fonctionnalité supérieure ou égale à 4.

5. Utilisation selon la revendication 1, **caractérisée en ce que** l'on utilise une composition réactive de polyuréthannes à deux composants dont le composant A3) a un poids moléculaire de 32 à 350.

6. Utilisation selon la revendication 1, **caractérisée en ce que** l'on utilise une composition réactive de polyuréthannes à deux composants dont le composant B) est un polyisocyanate organique aromatique.

7. Utilisation selon la revendication 1, **caractérisée en ce que** la composition réactive de polyuréthannes à deux composants est appliquée sur des substrats métalliques éventuellement objets d'une protection cathodique.

8. Utilisation selon les revendications 1 à 7, **caractérisée en ce que** les substrats métalliques éventuellement objets d'une protection cathodique consistent en parois à bondes, écluses, navires, conduits et autres objets métalliques des domaines de la marine, de l'exploitation offshore et de l'exploitation terrestre.
